# DEMANDE DE BREVET EUROPEEN

(11) **EP 4 364 990 A1**
(43) Date de publication de la demande: **08.05.2024**
(21) Numéro de dépôt: 23204975.9
(22) Date de dépôt: 20.10.2023
(51) Int. Cl.: B60K 11/08, B62D 35/00, B62D 37/02, G01S 13/931

(54) **SYSTÈME DE GUIDAGE DU FLUX D AIR D'UN VÉHICULE AUTOMOBILE ET VÉHICULE AUTOMOBILE COMPREND UN TEL SYSTÈME DE GUIDAGE DU FLUX D AIR**

(30) Priorité: 02.11.2022 FR 2211391
(71) Demandeur: Renault s.a.s, 92100 Boulogne Billancourt (FR)
(72) Inventeur: MULATO, Gilles, 78280 GUYANCOURT (FR)

(57) **Abrégé**

Système (10) de guidage du flux d'air d'un véhicule automobile comprenant un premier dispositif (11) de guidage du flux d'air configuré pour faire circuler un flux d'air vers un radiateur du véhicule automobile et comprenant deux grilles (12a, 12b) agencées l'une à côté de l'autre selon un axe transversal (Y) et comprenant chacune une pluralité d'ouvertures (13a, 13b) et une pluralité de volets mobiles (14a, 14b) pivotant chacun entre une position de fermeture d'une ouverture et une position d'ouverture, un deuxième dispositif (20) de guidage du flux d'air comprenant deux organes déflecteurs (22, 24) disposés chacun en amont d'une roue avant (7, 8) et configurés chacun pour dévier un flux d'air dirigé sur la roue avant correspondante, et mobiles en rotation autour d'un axe de rotation (26) horizontal, et un dispositif (30) de commande configuré pour pivoter simultanément les volets mobiles (14a, 14b) et les organes déflecteurs (22, 24).

## Description

La présente invention concerne le domaine des véhicules automobiles et notamment les dispositifs de guidage d'un flux d'air tels que les déflecteurs d'un véhicule.

Par « déflecteur », on entend un dispositif configuré pour dévier un flux d'air.

Les déflecteurs sont généralement utilisés dans les véhicules automobiles dans le but d'améliorer l'aérodynamisme du véhicule, c'est à dire l'interaction entre l'air et le véhicule en mouvement.

En effet, l'aérodynamisme d'un véhicule est un paramètre important pour limiter la consommation de carburant et ainsi réduire les émissions de particules polluantes, notamment le dioxyde de carbone CO2 dans le cas d'un véhicule à moteur thermique. L'autonomie d'un véhicule à moteur électrique est également impactée par l'aérodynamisme.

Il est connu de modifier la forme du véhicule afin de réduire les pertes d'énergie dues à la pénétration du véhicule dans l'air.

Toutefois, certaines pièces du véhicule, telles que les roues, et notamment les roues avant, opposent une résistance à l'avancement du véhicule et perturbent l'écoulement des flux d'air sous et autour dudit véhicule.

Afin de réduire les pertes d'énergie et orienter au mieux les flux d'air venant de l'avant du véhicule vers les roues avant, il est connu de disposer un dispositif comprenant deux déflecteurs aérodynamiques situés unitairement devant une roue avant. De tels déflecteurs sont connus sous le nom de « muret ». Plus la dimension verticale des murets est importante, plus ils sont efficaces. Toutefois, la dimension verticale des murets est limitée afin de permettre le passage du véhicule sur des obstacles usuellement présents en milieu urbain.

Le document A1 - FR 3 081 426 propose un dispositif déflecteur aérodynamique comprenant deux organes déflecteurs montés chacun devant une roue avant du véhicule et configurés pour être pivotés en fonction de la vitesse du véhicule. Toutefois, de tels organes déflecteurs sont complexes et nécessite de nombreuses pièces supplémentaires, ce qui rend leur implantation dans le véhicule difficile et coûteuse.

On connaît également les volets pivotants configurés pour ouvrir ou fermer les entrées d'air devant les radiateurs du véhicule. De tels volets sont disposés en arrière de la grille intérieure de bouclier.

Ainsi, il existe un besoin d'améliorer les dispositifs de déflecteurs de véhicule automobile.

L'objectif de l'invention est donc de pallier ces inconvénients et d'améliorer les dispositifs de déflecteurs de véhicule automobile, afin de permettre une implantation aisée, tout en réduisant les coûts de conception et de montage.

La présente invention a pour objet un système de guidage du flux d'air d'un véhicule automobile comprenant :
- un premier dispositif de guidage du flux d'air configuré pour faire circuler un flux d'air vers un radiateur du véhicule automobile,
- un deuxième dispositif de guidage du flux d'air configuré pour dévier un flux d'air dirigé sur les roues avant du véhicule, le deuxième dispositif de guidage du flux d'air comprenant deux organes déflecteurs disposés chacun en amont d'une roue avant et configurés chacun pour dévier un flux d'air dirigé sur la roue avant correspondante, chaque organe déflecteur étant mobile en rotation autour d'un axe de rotation horizontal, parallèle à un axe transversal entre une position de déviation du flux d'air et une position de circulation du flux d'air, et
- un dispositif de commande du premier et du deuxième dispositifs de guidage du flux d'air.

Le premier dispositif de guidage du flux d'air comprend deux grilles agencées l'une à côté de l'autre selon un axe transversal et comprenant chacune une pluralité d'ouvertures et une pluralité de volets mobiles pivotant chacun entre une position de fermeture dans laquelle un volet mobile obture une ouverture correspondante de la grille correspondante, et une position d'ouverture dans laquelle le volet mobile n'obture pas l'ouverture correspondante de la grille correspondante.

Les volets mobiles et les organes déflecteurs sont pivotés simultanément par le dispositif de commande dans l'une ou l'autre des positions.

En d'autres termes, chaque ouverture est associée à un volet mobile.

Les volets mobiles permettent d'optimiser les performances aérodynamiques du véhicule.

Le dispositif de commande permet de commander le déploiement de l'organe déflecteur de chaque roue avant en accord avec les volets de chacune des grilles.

Les organes déflecteurs pilotés assurent un aérodynamisme à vitesse élevée, tout en permettant le passage des obstacles urbains à vitesse réduite.

Les deux grilles sont distinctes l'une de l'autre et comprennent chacune un groupe de plusieurs volets mobiles.

Les grilles sont fixes par rapport au bouclier.

Par ailleurs, le montage du premier et du deuxième dispositifs de guidage du flux d'air est réalisé lors du montage du bouclier, ce qui réduit considérablement les étapes d'assemblage ultérieure et le nombres de pièces dans la ligne de montage.

Avantageusement, le dispositif de commande comprend un unique moteur, par exemple électrique, configuré pour entraîner en rotation simultanément les volets mobiles et les organes déflecteurs.

Ainsi, le contrôle et la commande des volets ainsi que des organes déflecteurs se fait à travers un seul moteur, ce qui permet de réduire l'encombrement et le poids d'une pluralité de moteur électrique pour entraîner en rotation séparément les différents dispositifs.

Par exemple, chaque volet mobile est solidaire d'un axe de rotation monté à rotation entre un guide central et un guide latéral.

En d'autres termes, le premier dispositif de guidage de flux comprend un guide central et deux guides latéraux, à savoir un premier guide latéral pour guider en rotation les axes des volets de la première grille et un deuxième guide latéral pour guider en rotation les axes des volets de la deuxième grille.

Les axes de rotation des volets mobiles sont avantageusement horizontaux, et passent par un axe médian de chacun des volets, de sorte que lors de la rotation de chacun des volets d'une position vers l'autre position, chacun des volets mobiles est mis en rotation autour de son propre axe.

Par exemple, le premier dispositif de guidage de flux d'air comprend quatre axes de rotation chacun portant à rotation une pluralité de volets mobiles.

De manière nullement limitative, le premier axe de rotation porte trois volets mobiles et les deuxième, troisième et quatrième axes de rotation portent chacun à rotation quatre volets mobiles.

En variante, on pourrait prévoir un nombre différent d'axes de rotation, par exemple supérieur ou égal à un.

On pourrait également prévoir que chacun des axes de rotation porte un nombre différent de volets mobiles, par exemple supérieur ou égal à deux volets mobiles par axes de rotation.

Avantageusement, l'axe de rotation de chacun des organes déflecteurs est entrainé en rotation par le dispositif de commande simultanément aux axes de rotations des volets mobiles du premier dispositif de guidage du flux d'air.

Par exemple, dans la position d'ouverture, les volets mobiles s'étendent dans un plan horizontal, et dans la position de fermeture, les volets mobiles s'étendent dans un plan vertical.

En variante, on pourrait prévoir une position intermédiaire dans laquelle le volet est pivoté dans une position d'ouverture partielle comprise entre la position d'ouverture et la position de fermeture.

Les grilles sont, de préférence, identiques entre elles et symétriques l'une par rapport à l'autre par rapport à un axe médian vertical passant par le milieu du premier dispositif de guidage de flux d'air.

Par exemple, les grilles ne sont pas alignées suivant l'axe transversal et forment un angle inférieur à 180°, par exemple compris entre 120° et 170°. Un tel agencement de deux grilles permet d'épouser au mieux le galbe du véhicule automobile et d'améliorer davantage l'aérodynamisme du véhicule.

Avantageusement, les ouvertures et les volets mobiles du premier dispositif de guidage de flux d'air sont en concordance de forme, de sorte à obturer complètement l'ouverture correspondante lors de la rotation des volets dans la position de fermeture.

A titre d'exemple, et de manière nullement limitative, les ouvertures et les volets mobiles du premier dispositif de guidage de flux d'air ont une forme un losange.

Les volets mobiles sont avantageusement agencés suivant des lignes de losanges disposées horizontalement les unes au-dessus des autres. Les lignes de losanges sont rapprochées de façon que les formes complémentaires des losanges se complètent.

Lorsque les volets sont dans la position de fermeture, on distingue une pluralité de formes en losange.
En variante, on pourrait prévoir tout autre forme pour les ouvertures et les volets mobiles.

Avantageusement, le premier dispositif de guidage du flux d'air comprend un logement de réception d'un organe de détection, tel que par exemple un capteur ou un radar, ledit logement de réception étant situé au milieu du premier dispositif de guidage du flux d'air sur le guide central.

La disposition médiane d'un logement de réception d'un organe de détection permet d'améliorer la performance des volets mobiles qui ne sont pas impactés par l'organe de détection.

Ledit logement de réception d'un organe de détection est, par exemple, situé dans une zone correspondant à un retrait des ouvertures sur les deux grilles.

Par exemple, la zone en retrait est située sur la troisième ligne d'ouvertures comprenant trois ouvertures et dans laquelle les ouvertures sont décalées suivant la direction transversale par rapport aux ouvertures des lignes au-dessus et en-dessous.

Par exemple, chaque organe déflecteur est sous la forme d'un muret ou écran mobile en rotation autour d'un axe de rotation horizontal, parallèle à l'axe transversal.

Par exemple, chaque organe déflecteur est sous la forme d'un écran plan. En variante, on pourrait prévoir toute autre forme, par exemple une forme en L.

Selon un second aspect, l'invention concerne un véhicule automobile comprenant une carrosserie comprenant un bouclier avant, un capot avant et une calandre, au moins deux roues avant, et au moins un système de guidage du flux d'air tel que décrit précédemment, le premier dispositif de guidage du flux d'air du système de guidage du flux d'air étant disposé en-dessous du bouclier avant.

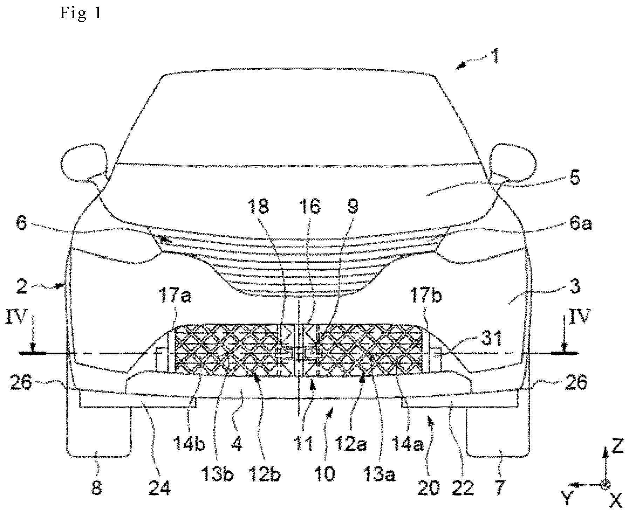

D'autres buts, caractéristiques et avantages de l'invention apparaîtront à la lecture de la description suivante, donnée uniquement à titre d'exemple non limitatif, et faite en référence aux dessins annexés sur lesquels :
[Fig.1]
   illustre de manière très schématique la face avant d'un véhicule automobile comprenant un système de guidage du flux d'air selon l'invention ;
[Fig.2]
   représente en détails le système de guidage du flux d'air de la figure 1 dans une position fermée ;
[Fig.3]
   représente en détails le système de guidage du flux d'air de la figure 1 dans une position ouverte ; et
[Fig.4]
   représente une vue selon l'axe IV-IV de la figure 1.

Dans la description qui suit, les termes « longitudinal », « transversal », « vertical », « avant », « arrière », « gauche » et « droite » sont définis selon le repère orthogonal habituel des véhicules à moteur, représenté sur les dessins, et qui comprend :
- un axe longitudinal X, horizontal et orienté de l'avant vers l'arrière du véhicule ;
- un axe transversal Y, horizontal, perpendiculaire à l'axe longitudinal X et orienté de la gauche vers la droite du véhicule quand le véhicule avance ;
- un axe vertical Z, orthogonal aux axes longitudinal et transversal X et Y et dirigé de bas en haut.

Sur la figure 1, on a représenté de manière très schématique une face avant d'un véhicule automobile, référencée 1 dans son ensemble, comprenant une carrosserie 2 comprenant un bouclier avant 3, un pare-chocs avant 4, un capot avant 5 et une calandre 6. Le bouclier avant 3 correspond à une partie basse de la carrosserie 2, près du sol et en-dessous de la calandre 6.

Le bouclier 3 a pour but de protéger les piétons en cas de choc frontal.

La calandre 6 est disposée à l'avant du capot 5 et comprend un cadre couvrant une ouverture dans la carrosserie et comprenant une grille 6a permettant une entrée d'air vers le radiateur du véhicule (non représenté).

Le véhicule automobile 1 comprend en outre quatre roues, dont seulement deux roues avant 7, 8 sont visibles sur la figure 1.

Le véhicule automobile comprend en outre un système 10 de guidage du flux d'air configuré pour guider le flux d'air.

Tel qu'illustré, le système 10 de guidage du flux d'air comprend un premier dispositif 11 de guidage du flux d'air disposé en-dessous du bouclier avant 3 et configuré pour faire circuler le flux d'air vers le radiateur et le moteur du véhicule automobile.

Le premier dispositif 11 de guidage du flux d'air remplace la grille inférieure de bouclier connue dans l'état de la technique.

Le système 10 de guidage du flux d'air comprend en outre un deuxième dispositif 20 de guidage du flux d'air configuré pour dévier un flux d'air dirigé sur les roues avant 7, 8 du véhicule.

Le système 10 de guidage du flux d'air comprend un dispositif 30 de commande du premier et du deuxième dispositifs 11, 20 de guidage du flux d'air.

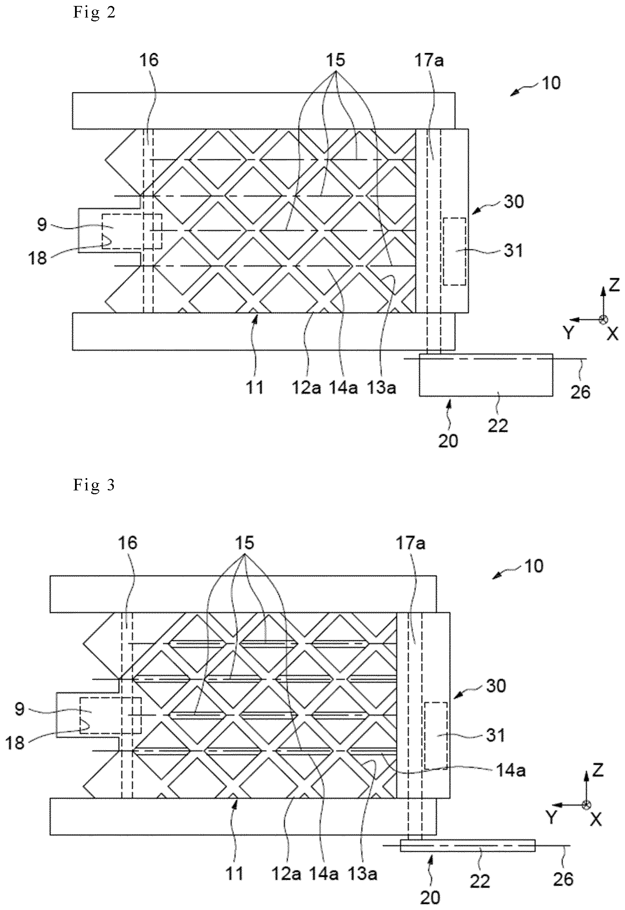

Tel qu'illustré en détails sur les figures 2 à 4, le premier dispositif 11 de guidage du flux d'air comprend deux grilles 12a, 12b agencées l'une à côté de l'autre selon l'axe transversal Y et comprenant chacune une pluralité d'ouvertures 13a, 13b.

Par « grille », on entend un assemblage de barreaux entrecroisés ou parallèles fermant partiellement une ouverture, tout en laissant passer un flux d'air.

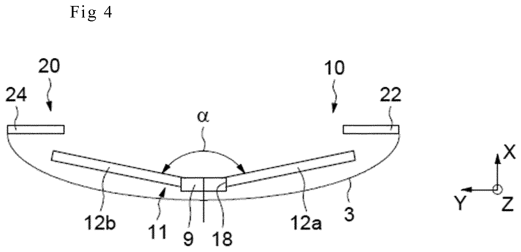

Tel qu'on peut le voir sur la figure 4, les grilles 12a, 12b ne sont pas alignées suivant l'axe transversal Y et forment un angle α inférieur à 180°, par exemple compris entre 120° et 170°. Un tel agencement de deux grilles permet d'épouser au mieux le galbe du véhicule automobile et d'améliorer davantage l'aérodynamisme du véhicule.

Les grilles 12a, 12b sont identiques entre elles et symétriques l'une par rapport à l'autre par rapport à un axe médian vertical passant par le milieu du premier dispositif 11 de guidage de flux d'air, de sorte qu'une seule des grilles 12a ne sera décrite dans la suite de la description.

L'axe médian passe également par le milieu du véhicule automobile 1.

Le premier dispositif 11 de guidage du flux d'air comprend en outre une pluralité de volets mobiles 14a, 14b pivotant chacun entre une première position de fermeture, visible sur la figure 2, dans laquelle un volet mobile 14a, 14b obture une ouverture correspondante 13a, 13b de la grille correspondante 12a, 12b, et une deuxième position d'ouverture, visible sur la figure 3, dans laquelle le volet mobile 14a, 14b n'obture pas l'ouverture correspondante 13a, 13b de la grille correspondante 12a, 12b.

En d'autres termes, chaque ouverture 13a, 13b est associée à un volet mobile 14.

Dans la position d'ouverture, les volets mobiles s'étendent dans un plan horizontal XY, et dans la position de fermeture, les volets mobiles s'étendent dans un plan vertical YZ.

En variante, on pourrait prévoir que dans la position d'ouverture, les volets mobiles soient dans un plan vertical XZ.

En variante, on pourrait prévoir une position intermédiaire dans laquelle le volet est pivoté dans une position d'ouverture partielle comprise entre la position d'ouverture et la position de fermeture.

Les volets mobiles 14a, 14b permettent d'optimiser les performances aérodynamiques du véhicule.

Chaque volet mobile 14a, 14b est solidaire d'un axe de rotation 15 monté à rotation entre un guide central 16 et un guide latéral 17a, 17b.

Les axes de rotation 15 sont ici horizontaux, et passent par un axe transversal médian de chacun des volets, de sorte que lors de la rotation de chacun des volets d'une position vers l'autre position, chacun des volets mobiles est mis en rotation autour de son propre axe.

Tel qu'illustré, le premier dispositif 11 de guidage de flux d'air comprend quatre axes de rotation 15 chacun portant à rotation une pluralité de volets mobiles 14a, 14b. De manière nullement limitative, le premier axe de rotation porte trois volets mobiles et les deuxième, troisième et quatrième axes de rotation portent chacun à rotation quatre volets mobiles.

En variante, on pourrait prévoir un nombre différent d'axes de rotation, par exemple supérieur ou égal à un.

On pourrait également prévoir que chacun des axes de rotation porte un nombre différent de volets mobiles, par exemple supérieur ou égal à deux volets mobiles par axes de rotation.

Les axes de rotation 15 sont montés axialement entre deux guides de rotation 16, 17a, 17b et entraînés en rotation par le dispositif 30 de commande.

L'ensemble des axes de rotation 15 et donc des volets mobiles 14a, 14b sont actionnés simultanément par le dispositif de commande dans l'une ou l'autre des positions.

Le dispositif 30 de commande comprend à cet effet un moteur 31, par exemple un moteur électrique, de chaque côté d'un plan médian vertical longitudinal du véhicule, c'est-à-dire pour chaque paire de premier 11 et deuxième 20 dispositifs de guidage du flux d'air. Le véhicule comprend donc deux moteurs pour ces dispositifs de guidage.

Les ouvertures 13a, 13b et les volets mobiles 14a, 14b sont en concordance de forme, de sorte à obturer complètement l'ouverture correspondante lors de la rotation des volets dans la position de fermeture.

Tel qu'illustré, et de manière nullement limitative, les ouvertures 13a, 13b et les volets mobiles 14a, 14b ont une forme un losange. Les volets mobiles sont ici agencés suivant des lignes de losanges disposées horizontalement les unes au-dessus des autres. Les lignes de losanges sont rapprochées de façon que les formes complémentaires des losanges se complètent.

Lorsque les volets sont dans la position de fermeture, on distingue une pluralité de formes en losange.

En variante, on pourrait prévoir tout autre forme pour les ouvertures et les volets mobiles.

Tel qu'illustré, le premier dispositif 11 de guidage du flux d'air comprend un logement 18 de réception d'un organe de détection 9, tel que par exemple un capteur ou un radar.

Le logement 18 de réception d'un organe de détection 9 est situé au milieu du premier dispositif 11 de guidage du flux d'air sur le guide central 16.

Tel qu'illustré sur les figures 2 et 3, ledit logement 18 est situé dans une zone correspondant à un retrait des ouvertures 13a, 13b sur les deux grilles 12a, 12b.

La zone de retrait est ici située sur la troisième ligne d'ouvertures comprenant trois ouvertures et dans laquelle les ouvertures sont décalées suivant la direction transversale Y par rapport aux ouvertures des lignes au-dessus et en-dessous.

La disposition médiane du logement 18 de réception d'un organe de détection permet d'améliorer la performance des volets mobiles qui ne sont pas impactés par l'organe de détection.

Le deuxième dispositif 20 de guidage du flux d'air comprenant deux organes déflecteurs 22, 24 disposés chacun en amont d'une roue avant 7, 8 et configurés chacun pour dévier un flux d'air dirigé sur la roue avant correspondante.

Chaque organe déflecteur 22, 24 est disposé axialement individuellement devant la roue, soit plus ou moins face à la bande de roulement du pneu.

Chaque organe déflecteur 22, 24 est sous la forme d'un muret ou écran mobile en rotation autour d'un axe de rotation 26 horizontal, parallèle à l'axe transversal Y entre une position de déviation du flux d'air visible sur la figure 2 et une position de circulation du flux d'air, visible sur la figure 3.

Tel qu'illustré chaque organe déflecteur 22, 24 est sous la forme d'un écran plan. En variante, on pourrait prévoir toute autre forme, par exemple une forme en L.

L'axe de rotation 26 de chacun des organes déflecteurs 22, 24 est entrainé en rotation par le moteur 31 du dispositif 30 de commande simultanément aux axes de rotations des volets du premier dispositif 11 de guidage du flux d'air.

En d'autres termes, le moteur 31 est configuré pour entraîner en rotation simultanément les volets mobiles et les organes déflecteurs, ce qui permet de réduire l'encombrement et le poids d'une pluralité de moteur électrique pour entraîner en rotation séparément les différents dispositifs.

Le dispositif de commande 30 permet de commander le déploiement de l'organe déflecteur de chaque roue avant en accord avec les volets de chacune des grilles. Ainsi, le contrôle et la commande des volets ainsi que des organes déflecteurs se fait à travers un seul moteur.

Les organes déflecteurs pilotés assurent un aérodynamisme à vitesse élevée, tout en permettant le passage des obstacles urbains à vitesse réduite.

Par ailleurs, le montage du premier et du deuxième dispositifs 11, 20 de guidage du flux d'air est réalisé lors du montage du bouclier, ce qui réduit considérablement les étapes d'assemblage ultérieure et le nombres de pièces dans la ligne de montage.

La figure 4 illustre uniquement l'agencement des premier et deuxième dispositifs 11, 20 de guidage du flux d'air. Le dispositif de commande 30 n'a pas été représenté pour ne pas alourdir la figure.

Le véhicule peut comprendre deux systèmes de guidage 10, un système de guidage étant disposé de chaque côté du véhicule, symétriquement par rapport à un plan médian vertical longitudinal du véhicule, chaque système de guidage ayant son moteur.

En variante, on pourrait prévoir un unique moteur pour les deux systèmes de guidage.

Grâce à l'invention, il est possible d'améliorer les performances aérodynamiques des dispositifs de guidage du flux d'air du véhicule automobile tout en permettant une implantation aisée dans le véhicule automobile et en réduisant les coûts de conception et de montage.

## Revendications

1. Système (10) de guidage du flux d'air d'un véhicule automobile comprenant :
- un premier dispositif (11) de guidage du flux d'air configuré pour faire circuler un flux d'air vers un radiateur du véhicule automobile,
- un deuxième dispositif (20) de guidage du flux d'air configuré pour dévier un flux d'air dirigé sur les roues avant (7, 8) du véhicule, le deuxième dispositif (20) de guidage du flux d'air comprenant deux organes déflecteurs (22, 24) disposés chacun en amont d'une roue avant (7, 8) et configurés chacun pour dévier un flux d'air dirigé sur la roue avant correspondante, chaque organe déflecteur (22, 24) étant mobile en rotation autour d'un axe de rotation (26) horizontal, parallèle à un axe transversal (Y) entre une position de déviation du flux d'air et une position de circulation du flux d'air, et
- un dispositif (30) de commande du premier et du deuxième dispositifs (11, 20) de guidage du flux d'air, **caractérisé en ce que** le premier dispositif (11) de guidage du flux d'air comprend deux grilles (12a, 12b) agencées l'une à côté de l'autre selon un axe transversal (Y) et comprenant chacune une pluralité d'ouvertures (13a, 13b) et une pluralité de volets mobiles (14a, 14b) pivotant chacun entre une position de fermeture dans laquelle un volet mobile (14a, 14b) obture une ouverture correspondante (13a, 13b) de la grille correspondante (12a, 12b), et une position d'ouverture dans laquelle le volet mobile (14a, 14b) n'obture pas l'ouverture correspondante (13a, 13b) de la grille correspondante (12a, 12b) et **caractérisé en ce que** les volets mobiles (14a, 14b) et les organes déflecteurs (22, 24) sont pivotés simultanément par le dispositif de commande (30) dans l'une ou l'autre des positions.

2. Système (10) selon la revendication 1, dans lequel le dispositif de commande (30) comprend un unique moteur (31) configuré pour entraîner en rotation simultanément les volets mobiles et les organes déflecteurs.

3. Système (10) selon la revendication 1 ou 2, dans lequel chaque volet mobile (14a, 14b) est solidaire d'un axe de rotation (15) monté à rotation entre un guide central (16) et un guide latéral (17a, 17b).

4. Système (10) selon la revendication 3, dans lequel les axes de rotation (15) des volets mobiles (14a, 14b) sont horizontaux, et passent par un axe médian de chacun des volets.

5. Système (10) selon la revendication 3 ou 4, dans lequel l'axe de rotation (26) de chacun des organes déflecteurs (22, 24) est entrainé en rotation par le dispositif (30) de commande simultanément aux axes de rotations (15) des volets mobiles (14a, 14b) du premier dispositif (11) de guidage du flux d'air.

6. Système (10) selon l'une quelconque des revendications précédentes, dans lequel dans la position d'ouverture, les volets mobiles (14a, 14b) s'étendent dans un plan horizontal (XY), et dans la position de fermeture, les volets mobiles (14a, 14b) s'étendent dans un plan vertical (YZ).

7. Système (10) selon l'une quelconque des revendications précédentes, dans lequel les grilles (12a, 12b) sont identiques entre elles et symétriques l'une par rapport à l'autre par rapport à un axe médian (Z1) vertical passant par le milieu du premier dispositif (11) de guidage de flux d'air.

8. Système (10) selon l'une quelconque des revendications précédentes, dans lequel les ouvertures (13a, 13b) et les volets mobiles (14a, 14b) du premier dispositif (11) de guidage de flux d'air sont en concordance de forme, de sorte à obturer complètement l'ouverture correspondante lors de la rotation des volets dans la position de fermeture.

9. Système (10) selon la revendication 8, dans lequel les ouvertures (13a, 13b) et les volets mobiles (14a, 14b) du premier dispositif (11) de guidage de flux d'air ont une forme en losange.

10. Système (10) selon la revendication 3 prise en combinaison avec l'une quelconque des revendications précédentes, dans lequel le premier dispositif (11) de guidage du flux d'air comprend un logement (18) de réception d'un organe de détection (9), ledit logement (18) de réception étant situé au milieu du premier dispositif (11) de guidage du flux d'air sur le guide central (16).

11. Système (10) selon l'une quelconque des revendications précédentes, dans lequel les grilles (12a, 12b) forment entre elles un angle (α) inférieur à 180°, de préférence compris entre 120° et 170°.

12. Système (10) selon la revendication 10, dans lequel ledit logement (18) de réception d'un organe de détection (9) est situé dans une zone correspondant à un retrait des ouvertures (13a, 13b) sur les deux grilles (12a, 12b).

13. Véhicule automobile comprenant une carrosserie (2) comprenant un bouclier avant (3), un capot avant (5), une calandre (6), au moins deux roues avant (7, 8), et au moins un système (10) de guidage du flux d'air selon l'une quelconques des revendications précédentes, le premier dispositif (11) de guidage du flux d'air du système (10) de guidage du flux d'air étant disposé en-dessous du bouclier avant (3).
